# EUROPEAN PATENT APPLICATION

(11) **EP 1 450 136 A2**
(43) Date of publication of application: **25.08.2004**
(21) Application number: 04075408.7
(22) Date of filing: 10.02.2004
(51) Int. Cl.: G01D 5/25, F16H 59/02, B60K 20/02, G01B 7/30

(54) **Sensor and method for encoding and detecting discrete positions**

(30) Priority: 24.02.2003 US 373001
(71) Applicant: Delphi Technologies, Inc., Troy, MI 48007 (US)
(72) Inventor: Moreno, Daniel J., El Paso, TX 79912 (US)
(74) Representative: Denton, Michael John

(57) **Abstract**

Sensor and method for encoding and detecting a plurality of discrete positions are provided. The sensor comprises an array of electromagnetic assemblies 12. Each assembly may be made up of a magnet 14, and a flux-sensing switch 18 electromagnetically coupable to the magnet to generate a signal having a respective logical state in response to the presence or absence of flux from the magnet. A flux mask 16 is movably interposed between each magnet and flux-sensing switch. The flux mask includes a window array configured to pass or block flux from each magnet. The window array is further configured so that each flux-sensing switch can generate in response to whether or not flux passes therethrough, a signal set encoded to uniquely identify each of the discrete positions as the flux mask is set at any of the discrete positions.

## Description

### BACKGROUND OF THE INVENTION

The present invention is generally related to position sensors and, more particularly, to a position sensor and method for encoding and contactless detection of discrete positions indicative of angular or linear displacement of a workpiece.

Detection of discrete positions of angular rotation or linear displacement is required in many applications including automotive applications, such as detection of automatic transmission lever position, pedal position, seat position, door position, seat belt position, etc. Known sensing devices for this type of applications generally use contacting devices to sense the discrete positions. These known devices typically use a contacting wiper, and, unfortunately, tend to suffer from limited life due to wiper wear, and from noisy signals during operational conditions of poor wiper contact. Examples of such conditions may include loss of wiper contact during vibration or during periods of rapid movement of the wiper. The noisy signals may result in erroneous indications that could lead to operational malfunctions or could lead the operator of the vehicle to perform an inappropriate action based on the erroneous indication.

In view of the foregoing issues, it would be desirable to provide an improved sensing device that may be produced at low cost, yet accurately and reliably allows sensing discrete positions of angular or linear displacement of a workpiece, such as a transmission lever, or any other piece of equipment whose position needs to be detected. It would be further desirable to encode indications corresponding to each discrete position so as to systematically enhance the detection capability of the position sensing device and reduce the possibility of erroneous indications that could otherwise result in inappropriate operation of the vehicle. It would be further desirable to avoid the use of contacting components in the sensing device so as to avoid the concomitant difficulties that may arise when contacting components are utilized in the sensor.

### BRIEF SUMMARY OF THE INVENTION

Generally, the present invention fulfills the foregoing needs by providing in one aspect thereof, a sensor for contactless sensing a plurality of discrete positions. The sensor comprises an array of electromagnetic assemblies. Each assembly may be made up of a magnet, and a flux-sensing switch electromagnetically coupable to the magnet to generate a signal having a respective logical state in response to the presence or absence of flux from the magnet. A flux mask is movably interposed between each magnet and flux-sensing switch. The flux mask includes a window array configured to pass or block flux from each magnet. The window array is further configured so that each flux-sensing switch can generate in response to whether or not flux passes therethrough, a signal set encoded to uniquely identify each of the discrete positions as the flux mask is set at any of the discrete positions.

In another aspect thereof, the present invention further fulfills the foregoing needs by providing a method for encoding and detecting discrete positions of a workpiece. The method allows providing an array of electromagnetic assemblies. Each assembly may be made up of a magnet, and a flux-sensing switch electromagnetically coupable to the magnet to generate a signal having a respective logical state in response to the presence or absence of flux from the magnet. The method further allows interposing a movable flux mask between each magnet and flux-sensing switch. The flux mask includes a window array configured to pass or block flux from each magnet. The window array may be further configured so that each flux-sensing switch can generate in response to whether or not flux passes therethrough a signal set encoded to uniquely identify each of the discrete positions as the flux mask is set at any of the discrete positions.

### BRIEF DESCRIPTION OF THE DRAWINGS

The features and advantages of the present invention will become apparent from the following detailed description of the invention when read with the accompanying drawings in which:
FIG. 1 illustrates a schematic of a contactless sensor embodying aspects of the present invention as may be exemplarily configured for encoding and detecting transmission states of a transmission used in a vehicle.
FIG. 2 illustrates an exemplary isometric representation of a lever of the transmission for selecting respective transmission states that may be contactless sensed by the sensor of FIG. 1.
FIG. 3 illustrates an exemplary window array in a flux mask that may be used by the sensor of FIG. 1, assuming rotary travel.
FIG. 4 illustrates another exemplary window array that may be used by the sensor of FIG. 1, assuming linear travel.

### DETAILED DESCRIPTION OF THE INVENTION

The inventor of the present invention has innovatively recognized an improved sensing device for contactless sensing and encoding a plurality of discrete positions of a workpiece. In one exemplary embodiment, the workpiece, such as a transmission lever, may be indicative of a plurality of transmission states available in an automotive transmission. It will be appreciated, however, that the sensor and sensing techniques embodying aspects of the present invention are not limited to a transmission application. For example, any other piece of equipment whose angular or linear position needs to be detected may benefit from sensor and sensing techniques embodying aspects of the present invention. Other exemplary applications may include sensing and encoding discrete positions of a pedal, a seat, a door, a seat belt, etc. The foregoing description of applications is not meant to be an exhaustive listing of applications and is provided to illustrate some exemplary applications. In one exemplary embodiment and in a basic level of implementation, the sensing device may be made up of inexpensive and off-the-shelf components, such as a magnet, a ferro-magnetic mask or shield, and a magnetic flux sensing element, e.g., a Hall effect or magnetoresistive sensor or switch.

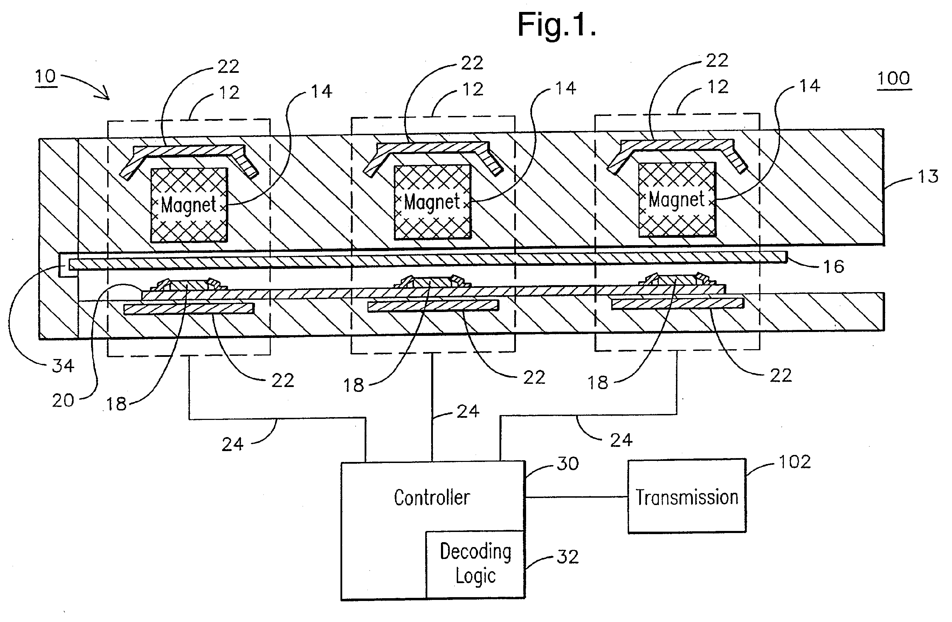

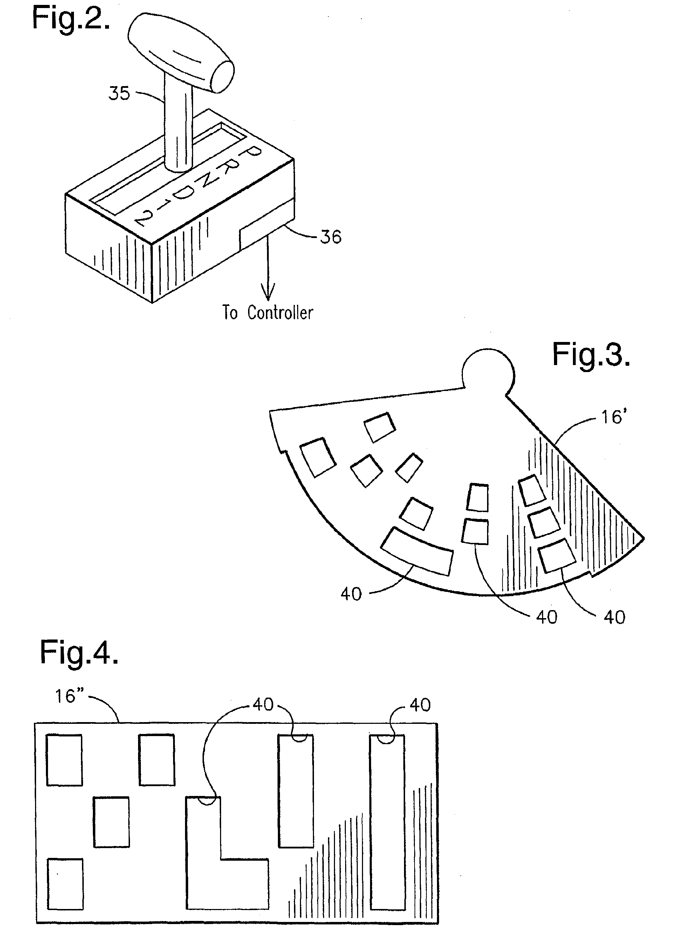

By way of illustration and not of limitation, FIG. 1 shows one exemplary construction of a transmission system 100 that uses a contactless discrete position sensor 10. As shown in FIG. 1, the sensor may comprise an array of electromagnetic assemblies 12 appropriately disposed in a housing 13, such as a plastic housing. Each assembly 12 includes a magnet 14 to be electromagnetically coupled through a flux mask 16 with a corresponding array of flux-sensitive switches 18, such as uni-polar Hall switches or magnetoresistive switches. The flux mask may comprise a relatively thin, ferrous plate or disk with windows (e.g., openings 40 in FIGS. 3 and 4) configured to selectively allow passage to the flux from each magnet 12 as the flux-sensing mask 16, which is interposed between the magnets and the flux switches, is set from one discrete position to another discrete position. That is, when a window in the mask is aligned between any corresponding magnet and switch, then the flux from the magnet will pass through the window and that flux will cause the switch to respond in one predefined manner. Conversely, when the structure of the mask is interposed between any corresponding magnet and switch, then the flux from the magnet will be blocked and the absence of flux will cause the switch to respond in another predefined manner.

The switches may be mounted and electrically connected to share a common electrical ground and electric power signal by way of a printed circuit board 20. As shown in FIG. 1, respective flux concentrators 22 may be disposed near each magnet 14 and/or near each switch 18 to concentrate the magnetic flux so as to enhance to sensitivity of the assembly as well as reduce electromagnetic cross-coupling effects between any adjacent assemblies. As will be understood by those skilled in the art, the spacing between each magnet 14 and a corresponding flux-sensing switch 18 may be chosen to ensure that the flux level under expected operational conditions and mechanical assembly variations exceeds the switching threshold level of the switch. It will be further understood that the inter-spacing between any adjacent magnet assemblies 12 in the array should be chosen to minimize crosstalk therebetween. Each switch 18 in the array includes a respective output terminal 24 to pass a signal configured to identify the presence or absence of flux mask 16 between any corresponding magnet and flux-sensing switch. That is, a signal that may be in a first logical state when the flux passes through the window and in second logical state when the flux is blocked by the mask.

The exemplary contactless sensor embodiment of FIG. 1 may be used for sensing any discrete position of a transmission lever 35 (FIG. 2) for selecting a respective gear in a transmission 102. By way of example, the position sensor of FIG. 1 may be configured to identify eight discrete positions using an array of three switches. As will be readily understood by one skilled in the art, this embodiment may provide a five terminal interface connector 36 for carrying signals, such as electrical power, ground to an appropriate power bus, and the three respective output terminals from each sensor assembly to a controller 30, e.g., a transmission controller.

Table 1 illustrates and exemplary binary switching pattern encoded to provide a change of at least two bits between any two adjacent positions and to generate output signals indicative of each discrete position. As shown in FIG. 1, the output signals from the switch array may be decoded by controller 30 including decoding logic as may be stored in memory 32 that would allow to uniquely associate the logical state of each output signal from the switch array to each discrete position. As suggested above, the encoding provided by the switch pattern is configured to reduce the probability of detecting a false gear condition or conversely missing a correct gear condition. As suggested above, the appropriate signal combination is achieved as the flux mask interposed between any corresponding magnet and switch is set at a new discrete position from a previous discrete position.

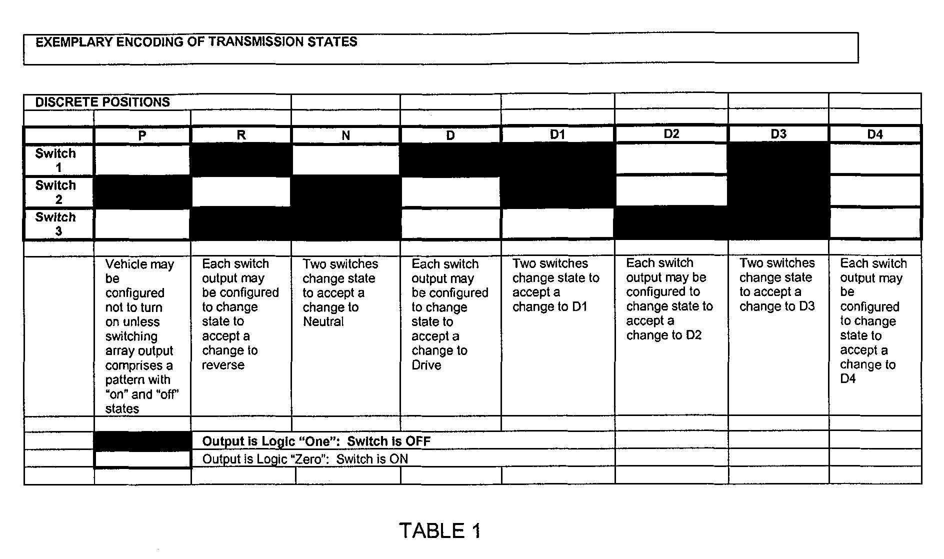

As will be appreciated by those skilled in the art, the array of electromagnetic assemblies may be configured to best meet the needs of any given application. For example, the number of discrete positions to be detected may determine the number of assemblies to use. Similarly, the flux mask may be configured to meet the detection requirements of any given application, e.g., the number of discrete positions to be detected may also determine the number of windows to use. Both the array of electromagnetic assemblies and the flux mask may be configured for detection of linear or rotary motion. For example, in a rotary motion application, the flux mask may be supported about a pivot 34 that would allow relative rotation between the mask and the array of assemblies. In a linear motion application, the flux mask may be supported by one or more rails (not shown) that would allow for slidable linear movement between the flux mask and the array of assemblies.

FIGS. 3 and 4 respectively show flux masks 16' and 16" configured for detecting the exemplary binary pattern listed in Table 1. More specifically, the flux mask 16' of FIG. 3 is configured to provide an appropriate encoding for rotary motion. The flux mask 16 " of FIG. 4 is configured to provide an appropriate encoding for linear motion.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the spirit and scope of the appended claims.

## Claims

1. A sensor 10 for contactless sensing a plurality of discrete positions, the sensor comprising:
an array of electromagnetic assemblies 12, each assembly comprising:
a magnet 14; and
a flux-sensing switch 18 electromagnetically coupable to the magnet to generate a signal having a respective logical state in response to the presence or absence of flux from the magnet; and
a flux mask 16 movably interposed between each magnet and flux-sensing switch, the flux mask including a window array configured to pass or block flux from each magnet, the window array being further configured so that each flux-sensing switch can generate in response to whether or not flux passes therethrough a signal set encoded to uniquely identify each of the discrete positions as the flux mask is set at any of the discrete positions.

2. The contactless sensor of claim 1 wherein the window array is configured to cause a change in the switching state of each flux-sensing switch number when transitioning to at least one discrete position identified with a high level of priority.

3. The contactless sensor of claim 1 wherein the window array in the flux mask is configured to detect angular travel.

4. The contactless sensor of claim 1 wherein the window array in the flux mask is configured to detect linear travel.

5. The contactless sensor of claim 1 further comprising a controller (e.g., 30) coupled to receive the signal set encoded to uniquely identify each of the discrete positions, the processor including memory with decoding logic for determining whether the received signal set corresponds to a valid signal set for detecting a given discrete position.

6. A method for encoding and detecting a plurality of discrete positions, the method comprising:
providing an array of electromagnetic assemblies 12, each assembly comprising:
a magnet 14; and
a flux-sensing switch 18 electromagnetically coupable to the magnet to generate a signal having a respective logical state in response to the presence or absence of flux from the magnet; and
interposing a movable flux mask between each magnet and flux-sensing switch, the flux mask 16 including a window array configured to pass or block flux from each magnet, the window array being further configured so that each flux-sensing switch can generate in response to whether or not flux passes therethrough a signal set encoded to uniquely identify each of the discrete positions as the flux mask is set at any of the discrete positions.

7. The method of claim 6 further comprising configuring the window array to cause a change in the switching state of each flux-sensing switch number when transitioning to at least one discrete position identified with a high level of priority.

8. The method of claim 6 further comprising configuring the window array in the flux mask to detect angular travel.

9. The method of claim 6 further comprising configuring the window array in the flux mask to detect linear travel.

10. The method of claim 6 further comprising processing (e.g., 30) the signal set encoded to uniquely identify each of the discrete positions to determine whether the signal set being processed corresponds to a valid signal set for detecting any given discrete position.

11. The method of claim 10 wherein determining whether the received signal set corresponds to a valid signal set comprises relating a present signal set indicative of a present discrete position to the previous signal set indicative of the previous discrete position.
